# EUROPÄISCHE PATENTSCHRIFT

(11) **EP 3 388 649 B1**
(45) Veröffentlichungstag und Bekanntmachung des Hinweises auf die Patenterteilung: **05.05.2021**
(21) Anmeldenummer: 18162539.3
(22) Anmeldetag: 19.03.2018
(51) Int. Cl.: F02C 7/042, F02C 7/28

(54) **TRIEBWERKSGONDEL FÜR EIN TURBOFAN-TRIEBWERK**
NACELLE FOR A TURBOFAN ENGINE
NACELLE DE MOTEUR POUR UNE TURBOSOUFFLANTE

(30) Priorität: 31.03.2017 DE 102017106954
(43) Veröffentlichungstag der Anmeldung: 17.10.2018
(73) Patentinhaber: Rolls-Royce Deutschland Ltd & Co KG, 15827 Blankenfelde-Mahlow (DE)
(72) Erfinder: TODOROVIC, Predrag, 15827 Blankenfelde-Mahlow (DE)
(74) Vertreter: Müller, Wolfram Hubertus

(56) Entgegenhaltungen:
- DE-A1-102011 103 163
- DE-B- 1 078 375
- GB-A- 717 760
- GB-A- 940 584
- US-A- 3 623 494
- US-A- 5 014 933

## Beschreibung

Die Erfindung betrifft eine Triebwerksgondel für ein Turbofan-Triebwerk gemäß dem Oberbegriff des Patentanspruchs 1.

Zur Optimierung der Strömung im Triebwerkseinlauf ist es bekannt, in der Gondelwand diskrete türartige Öffnungen vorzusehen, über die Umgebungsluft von der Außenseite der Triebwerksgondel in den Triebwerkseinlauf strömen kann. Vom Kampfflugzeug Tupolev TU-22 KD ist hierzu bekannt, die Einlauflippe der Triebwerksgondel axial verschiebbar auszugestalten, um einen ringförmigen Zusatz-Strömungskanal bereitzustellen.

Aus der US 3 623 494 A ist eine gattungsgemäße Triebwerksgondel für ein Turbofan-Triebwerk bekannt.

Die DE 10 2011 103 163 A1 beschreibt ein Gasturbinentriebwerk, bei dem ein einströmseitiger Teil einer Triebwerksverkleidung zu Wartungszwecken teleskopartig gegen die Strömungsrichtung verschiebbar ist, wobei an der Innenseite der Triebwerksverkleidung in der verschobenen Position zwischen einer akustischen Dämpfung und einem Nebenstrom-Fangehäuse eine Öffnung bereitgestellt wird.

Aus der GB 717 760 A ist eine gattungsgemäße Triebwerksgondel bekannt.

Der vorliegenden Erfindung liegt die Aufgabe zu Grunde, eine Triebwerksgondel mit einem ringförmigen Zusatz-Strömungskanal bereitzustellen, die Strömungsverluste minimiert.

Diese Aufgabe wird durch eine Triebwerksgondel mit den Merkmalen des Patentanspruchs 1 gelöst. Ausgestaltungen der Erfindung sind in den Unteransprüchen angegeben.

Danach betrachtet die vorliegende Erfindung eine Triebwerksgondel mit einer Gondelwand, die im Bereich des Triebwerkseinlaufs einen feststehenden stromabwärtigen Abschnitt und einen in axialer Richtung verschiebbaren stromaufwärtigen Abschnitt aufweist. Der verschiebbare stromaufwärtige Abschnitt ist zwischen einer ersten stromaufwärtigen Position und einer zweiten stromabwärtigen Position axial verschiebbar. Die Erfindung sieht eine ringförmige Dichtung vor, die zwischen dem feststehenden und dem verschiebbaren Abschnitt der Gondelwand ausgebildet ist. Dabei bildet die Triebswerksgondel in der ersten Position des verschiebbaren Abschnitts einen ringförmigen Zusatz-Strömungskanal aus, der sich von der Außenhaut der Gondelwand zum Triebwerkseinlauf erstreckt und über den Umgebungsluft in den Triebwerkseinlauf strömen kann. Dagegen ist der ringförmige Zusatz-Strömungskanal in der zweiten Position des verschiebbaren Abschnitts geschlossen, wobei der feststehende Abschnitt, die ringförmige Dichtung und der verschiebbare Abschnitt in der geschlossenen Stellung aneinander angrenzen. Der verschiebbare Abschnitt kann sich dabei auch in axialen Positionen befinden, die zwischen der ersten Position und der zweiten Position liegen.

Die Erfindung beruht somit auf dem Gedanken, den durch einen axial verschiebbaren Abschnitt der Gondelwand bereitstellten Zusatz-Strömungskanal dadurch zu optimieren, dass eine ringförmige Dichtung zwischen dem feststehenden und dem verschiebbaren Abschnitt der Gondelwand bereitgestellt wird. Durch die ringförmige Dichtung wird sichergestellt, dass in der zweiten Position des verschiebbaren Abschnitts, wenn der Zusatz-Strömungskanal geschlossen ist, der feststehende Abschnitt und der verschiebbare Abschnitt sicher gegeneinander abgedichtet sind, so das keinerlei Luft zwischen dem feststehenden und dem verschiebbaren Abschnitt in den Triebwerkseinlauf gelangen kann. Die ringförmige Dichtung ermöglicht des Weiteren, scharfkantige Strukturen der Gondelwand abzudecken und einen aerodynamisch geformten, mit abgerundeten Strukturen versehenen Zusatz-Strömungskanal bereitzustellen. Durch beide Effekte werden Strömungsverluste minimiert.

Das stromabwärtige Ende des Zusatz-Strömungskanals endet im Triebwerkseinlauf, d.h. stromaufwärts des Fans des zugehörigen Triebwerks.

Gemäß einer Ausgestaltung der Erfindung ist die ringförmige Dichtung mit dem stromaufwärtigen Ende des feststehenden Abschnitts der Gondelwand verbunden. Hierdurch kann die ringförmige Dichtung scharfkantige Strukturen des feststehenden Abschnitts der Gondelwand, gegen die die durch den Zusatz-Strömungskanal strömende Umgebungsluft ohne die Existenz einer ringförmigen Dichtung prallen würde, in aerodynamisch günstiger Weise abdecken. Sie kann des Weiteren eine glatte und kantenfreie stromabwärtige Begrenzung des Zusatz-Strömungskanals bereitstellen.

Alternativ kann vorgesehen sein, dass die ringförmige Dichtung mit dem stromabwärtigen Ende des verschiebbaren Abschnitts der Gondelwand verbunden ist. In diesem Fall stellt sie eine glatte und kantenfreie stromaufwärtige Begrenzung des Zusatz-Strömungskanals bereit.

Grundsätzlich ist es ebenfalls möglich, in alternativen Ausgestaltungen eine ringförmige Dichtung sowohl am stromaufwärtigen Ende des feststehenden Abschnitts als auch am stromabwärtigen Ende des verschiebbaren Abschnitts der Gondelwand anzuordnen.

Die ringförmige Dichtung ist gemäß einer Ausgestaltung der Erfindung aus einem elastischen Material gebildet. Sie besteht beispielsweise aus einem Silikonkautschuk. Es können jedoch auch andere Elastomere eingesetzt werden. Die ringförmige Dichtung kann des Weiteren einstückig ausgebildet sein, für welchen Fall sie einen einstückigen Dichtungsring bildet, oder aus mehreren Segmenten bestehen, die jeweils einen Ringabschnitt bilden und aneinander angrenzen.

Die Erfindung sieht weiter vor, dass die ringförmige Dichtung aus einer oder mehreren Hohlkammern besteht, die aneinander angrenzen. Die Hohlkammern können mit Luft oder einem anderen Gas gefüllt sein. Jede der Hohlkammern ist elastisch ausgebildet. Gemäß einer Ausführungsvariante weist die ringförmige Dichtung mindestens eine radial äußere und eine radial innere Hohlkammer auf. Die radial äußere Hohlkammer begrenzt dabei den Zusatz-Strömungskanal angrenzend an die Außenwand der Gondel. Die radial innere Hohlkammer begrenzt den Zusatz-Strömungskanal zum Triebwerkseinlauf hin. Die Hohlkammern können sich ebenso wie die ringförmige Dichtung insgesamt in Umfangsrichtung über einen Winkelbereich von 360° oder über kleinere Winkelbereiche erstrecken.

Die Erfindung sieht weiter vor, dass die mindestens eine Hohlkammern modulierbar, d.h. während des Betriebs in ihrer Form veränderbar ist. Die Formgebung kann beispielsweise über den Grad der Befüllung mit Luft oder Gas eingestellt werden. Die Formgebung kann dabei in einer Ausführungsvariante abhängig von der axialen Position der verschiebbaren Abschnitts eingestellt werden. Beispielsweise sind die Hohlkammern stärker aufgeblasen und mit einem größeren Volumen versehen, wenn sich der verschiebbare Abschnitt in der stromaufwärtigen Position befindet. Dagegen sind die Hohlkammern weniger stark aufgeblasen und mit einem geringeren Volumen versehen, wenn sich der verschiebbare Abschnitt in der stromabwärtigen Position befindet, in der der feststehende Abschnitt, die ringförmige Dichtung und der verschiebbare Abschnitt aneinander angrenzen.

Gemäß einer Ausgestaltung der Erfindung bildet der verschiebbare Abschnitt der Gondelwand an seiner Innenseite einen stromabwärts abstehenden Wandbereich. Dieser ist radial innen zu der ringförmigen Dichtung positioniert. Der stromabwärts abstehende Wandbereich bildet gewissermaßen einen Überstand, der in Richtung des feststehenden Bereichs ragt oder an diesem im geschlossenen Zustand des Zusatz-Strömungskanals sogar anliegt. Hierdurch wird eine glatte Begrenzung des Triebwerkseinlaufs im geschlossenen Zustand des Zusatz-Strömungskanals sichergestellt.

In entsprechender Weise kann des Weiteren vorgesehen sein, dass der feststehende Abschnitt der Gondelwand an seiner Außenseite einen stromaufwärts abstehenden Wandbereich bildet, der sich radial außen der ringförmigen Dichtung erstreckt. Der stromaufwärts abstehende Wandbereich bildet dabei einen Überstand, der in Richtung des verschiebbaren Abschnitts der Gondelwand ragt oder an diesem im geschlossenen Zustand des Zusatz-Strömungskanals sogar anliegt. Hierdurch wird eine glatte Außenbegrenzung bzw. Außenhaut der Triebwerksgondel im geschlossenen Zustand des Zusatz-Strömungskanals sichergestellt.

Gemäß einer Ausgestaltung der Erfindung ist vorgesehen, dass der Zusatz-Strömungskanal und die ringförmige Dichtung derart ausgebildet und geformt sind, dass die aus dem Zusatz-Strömungskanal austretende Luft im Wesentlichen in axialer Richtung in den Triebwerkseinlauf eintritt. Hierzu verläuft der Zusatz-Strömungskanal an seinem dem Triebwerkseinlauf zugewandten Ende im Wesentlichen in axialer Richtung. In "im Wesentlichen in axialer Richtung" bedeutet dabei, dass die axiale Komponente der Erstreckungsrichtung größer ist als die radiale Komponente der Erstreckungsrichtung. Hierdurch wird erreicht, dass durch den Zusatz-Strömungskanal bereitgestellte Luft unter Ausbildung geringer Turbulenzen in den Strömungspfad eintritt, der dem Fan des Triebwerks Luft zuführt. Insbesondere bildet die durch den Zusatz-Strömungskanal bereitgestellte Luft eine Randströmung, die angrenzend an die Innenseite der Gondelwand verläuft und dadurch einen Strömungsabriss der Strömung im Triebwerkseinlauf hinter der Einlauflippe verhindert.

Die axiale Verstellung des verschiebbaren Abschnitts der Gondelwand erfolgt über Aktuatoren. Dabei sieht eine Ausgestaltung der Erfindung vor, dass der feststehende und der verschiebbare Abschnitt der Gondelwand über eine Linearverstellung gegeneinander verschiebbar sind. Hierzu kann beispielsweise vorgesehen sein, dass die Linearverstellung mehrere Aktuatoren mit jeweils mindestens einem linear verfahrbaren Arm aufweist, die entlang des Umfangs der Gondelwand verteilt sind. Gemäß einer Ausgestaltung der Erfindung sind mindestens drei solcher Aktuatoren vorgesehen.

Die Aktuatoren umfassen beispielsweise einen einfach wirkenden Zylinder, in dem eine Kolbenstange linear bewegbar ist, beispielsweise über einen hydraulischen, pneumatischen oder elektrischen Antrieb. Der Zylinder ist dabei in dem feststehenden Abschnitt der Gondelwand gelagert und das Ende der Kolbenstange an dem verschiebbaren Abschnitt der Gondelwand. Dabei kann vorgesehen sein, dass der Zylinder als Teleskopzylinder mit mehreren ineinander gebauten Zylindern aufgebaut ist.

Hierbei handelt es sich jedoch nur um eines einer Vielzahl möglicher Ausführungsbeispiele zur Realisierung einer Verschiebbarkeit des verschiebbaren Abschnitts. Alternative Ausführungsbeispiele sehen hierzu einen Gewindemechanismus oder eine Ritzel-Zahnstangen-Anordnung vor. Weiter kann vorgesehen sein, dass eine Mehrzahl gesonderter Aktuatoren vorgesehen ist (die beispielsweise hydraulisch, pneumatisch oder elektrisch angetrieben sind), deren Bewegung synchronisiert sein kann, oder dass nur ein Aktuator vorgesehen ist, der eine Vielzahl von synchronisierten Verstellelementen steuert.

Bei Verwendung eines Gewindemechanismus oder einer Ritzel-Zahnstangen-Anordnung sind diese bevorzugt mit Selbsthemmung ausgeführt, wodurch auf ein gesondertes Sicherungssystem zur Sicherung der Befestigung des verschiebbaren Abschnitts an der Gondelwand verzichtet werden kann.

Gemäß einer weiteren Ausgestaltung der Erfindung ist vorgesehen, dass der verschiebbare Abschnitt der Gondelwand gegenüber dem feststehenden Abschnitt der Gondelwand nicht nur in axialer Richtung verschiebbar, sondern auch kippbar ist. Hierdurch kann - analog einer Schubvektorsteuerung im Bereich der Schubdüse - eine Vektorsteuerung im Hinblick auf die angesagte Luft erfolgen. Hierdurch ist es beispielsweise möglich, die Strömung im Triebwerkseinlauf auch bei Vorliegen von Seitenwinden oder im Steigflug zu optimieren. Dabei kann ein Kippen des verschiebbaren Abschnitts der Gondelwand gegenüber dem feststehenden Abschnitt der Gondelwand grundsätzlich in beiden Raumrichtungen erfolgen, die senkrecht zur axialen Richtung verlaufen (also um die Gierachse und/oder die Querachse).

Zur Realisierung einer Verkippung des verschiebbaren Abschnitts der Gondelwand sieht eine Ausgestaltung der Erfindung vor, dass die ausfahrbaren Arme der Aktuatoren der Linearverstellung in unterschiedlichem Maße ausgefahren werden. Bei Ausfahren der Arme in gleichem Maße liegt ausschließlich eine Linearbewegung vor. Bei Ausfahren der Arme in unterschiedlichem Maße kann ein Kippen um die Gierachse und/oder um die Querachse des Triebwerks erreicht werden.

Es wird darauf hingewiesen, dass die ringförmige Dichtung nicht notwendigerweise kreisringförmig ausgebildet sein muss. In der axialen Ansicht können durchaus Abweichungen der Umfangslinie von einer idealen Kreisform und damit von einer strengen Achsensymmetrie vorliegen, um lokal stets eine ideale Anpassung an die Gondelwand und optimierte Strömungsbedingungen bereitstellen zu können. Als ringförmig wird jeder im Raum gekrümmte, in sich geschlossene Körper angesehen. Auch wird vorsorglich darauf hingewiesen, dass die ringförmige Dichtung keineswegs eine kreisförmige Querschnittsfläche aufweisen muss.

Eine weitere Ausgestaltung der Erfindung sieht vor, dass zumindest der feststehende stromabwärtige Abschnitt der Gondelwand angrenzend an den Triebwerkseinlauf, d.h. an seiner Innenseite mit einer schallabsorbierenden Verkleidung versehen ist. Zusätzlich kann auch der verschiebbare Abschnitt der Gondelwand an seiner Innenseite mit einer schallabsorbierenden Verkleidung versehen sein. Hierdurch wird die Abstrahlung von Triebwerkslärm reduziert.

Es wird darauf hingewiesen, dass die Gondelwand unterschiedliche sich axial erstreckende Abschnitte ausbildet, die durch unterschiedliche strukturelle Komponenten gebildet sein können. Dies gilt naturgemäß für den verschiebbaren Abschnitt der Gondelwand. Doch auch der feststehende Abschnitt der Gondelwand kann verschiedene Abschnitte umfassen, die durch unterschiedliche strukturellen Komponenten gebildet sind. Beispielsweise kann vorgesehen sein, dass die Gondelwand angrenzend an die Einlauflippe durch eine Einlaufverkleidung gebildet ist, an die sich in Strömungsrichtung ein Fangehäuse anschließt. Der Begriff Gondelwand im Sinne der vorliegenden Erfindung umfasst sämtliche Wandstrukturen der Triebwerksgondel und beschränkt sich nicht auf bestimmte Abschnitte. Dementsprechend ist im Sinne der vorliegenden Erfindung auch die Einlauflippe Bestandteil der Gondelwand. Die Einlauflippe ist dabei der strukturelle Teil der Gondelwand, der das stromaufwärtige Ende der Triebwerksgondel bildet.

Eine Ausgestaltung der Erfindung sieht vor, dass der verschiebbare Abschnitt der Triebwerksgondel durch die Einlauflippe gebildet ist. Gemäß dieser Ausführungsvariante ist somit die Einlauflippe in axialer Richtung verschiebbar ausgebildet. Die Einlauflippe ist am stromaufwärtigen Ende der Gondelwand angeordnet und bildet die Vorderkante der Triebwerksgondel. Grundsätzlich kann der verschiebbare Abschnitt aber auch an einem weiter stromabwärts angeordneten Abschnitt der Gondelwand ansetzen.

Die vorliegende Erfindung ist grundsätzlich sowohl für einen Einsatz in Turbofan-Triebwerken, die für einen subsonischen Betrieb ausgelegt sind, als auch für einen Einsatz in Turbofan-Triebwerken, die für einen supersonischen Betrieb ausgelegt sind, geeignet. Gemäß einer Ausgestaltung der Erfindung wird die erfindungsgemäße Triebwerksgondel somit in einem Turbofan-Triebwerk realisiert, das in einem zivilen oder militärischen Überschallflugzeug eingesetzt wird. Für diesen Fall ist der Triebwerkseinlauf als Überschalleinlauf ausgebildet, unter Ausbildung einer spitz zulaufenden Einlauflippe.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse des Turbofan-Triebwerks. Von der x-Achse ausgehend zeigt die radiale Richtung radial nach außen. Begriffe wie "vor", "hinter", "vordere" und "hintere" beziehen sich immer auf die axiale Richtung bzw. die Strömungsrichtung im Triebwerk. Die Bezeichnung "vor" bedeutet somit "stromaufwärts" und die Bezeichnung "hinter" bedeutet "stromabwärts". Begriffe wie "äußere" oder "innere" beziehen sich immer auf die radiale Richtung.

In weiteren Aspekten betrifft die Erfindung ein Turbofan-Triebwerk mit einem Triebwerkseinlauf gemäß Anspruch 1 und ein ziviles oder militärisches Flugzeug, insbesondere ein Überschallflugzeug mit einem solchen Turbofan-Triebwerk.

Die Erfindung wird nachfolgend unter Bezugnahme auf die Figuren der Zeichnung anhand mehrerer Ausführungsbeispiele näher erläutert. Es zeigen:
- Figur 1: in perspektivischer, teilweise geschnittener Ansicht ein Ausführungsbeispiel der axial vorderen Komponenten einer Triebwerksgondel, die einen feststehenden Abschnitt, eine ringförmige Dichtung und eine axial verschiebbare Einlauflippe ausbildet, wobei die Einlauflippe in einer stromaufwärtigen Position dargestellt ist, in der sie einen Zusatz-Strömungskanal freigibt;
- Figur 2: die Triebwerksgondel der Figur 1, wobei die axial verschiebbare Einlauflippe in einer stromabwärtigen Position dargestellt ist, in der der Zusatz-Strömungskanal verschlossen ist;
- Figur 3: eine vergrößerte, teilweise geschnittene Ansicht des feststehenden Abschnitts und der ringförmigen Dichtung der Triebwerksgondel der Figuren 1-2;
- Figur 4: eine teilweise geschnittene Ansicht des feststehenden Abschnitts, der ringförmigen Dichtung und der Einlauflippe in einer ausgefahrenen Position der Einlauflippe;
- Figur 5: eine teilweise geschnittene Ansicht des feststehenden Abschnitts, der ringförmigen Dichtung und der Einlauflippe in einer eingefahrenen Position der Einlauflippe
- Figur 6: eine teilweise geschnittene Ansicht des feststehenden Abschnitts, der ringförmigen Dichtung und der Einlauflippe in einer mittleren Position der Einlauflippe;
- Figur 7: einen Längsschnitt der Triebwerksgondel der Figuren 1-6 unter schematischer Darstellung der Strömung im Zusatz-Strömungskanal;
- Figur 8: in Vorderansicht die ringförmige Dichtung der Triebwerksgondel der Figuren 1-7, wobei die ringförmige Dichtung über einen Winkelbereich von 180° dargestellt ist;
- Figur 9: einen Längsschnitt der gesamten Triebwerksgondel bei ausgefahrener Position der Einlauflippe;
- Figur 10: einen Längsschnitt der gesamten Triebwerksgondel bei eingefahrener Position der Einlauflippe;
- Figur 11: einen Längsschnitt der gesamten Triebwerksgondel bei einer um die Zuströmachse gekippten Einlauflippe;
- Figur 12: in teilweise geschnittener Ansicht den vertikal oberen Teil der Triebwerksgondel bei gekippter Einlauflippe gemäß der Figur 11;
- Figur 13: in teilweise geschnittener Ansicht den vertikal unteren Teil der Triebwerksgondel bei gekippter Einlauflippe gemäß der Figur 11;
- Figur 14: ein alternatives Ausführungsbeispiel einer Triebwerksgondel, bei der eine ringförmige Dichtung am stromabwärtigen Ende einer axial verschiebbaren Einlauflippe angeordnet ist, wobei die Einlauflippe in einer stromaufwärtigen Position dargestellt ist, in der sie einen Zusatz-Strömungskanal freigibt; und
- Figur 15: das Ausführungsbeispiel der Figur 14, wobei die axial verschiebbare Einlauflippe in einer stromabwärtigen Position dargestellt ist, in der der Zusatz-Strömungskanal verschlossen ist.

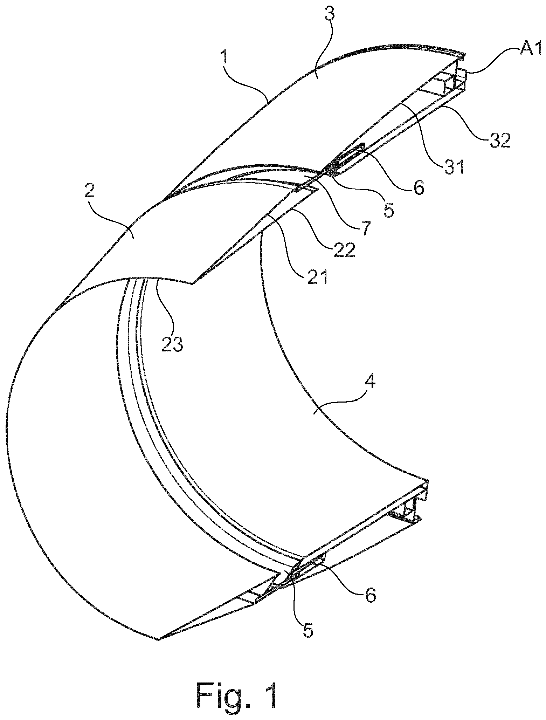

Die Figur 1 zeigt die axial vorderen Komponenten einer Triebwerksgondel eines Turbofan-Triebwerks, das dafür vorgesehen und geeignet ist, in einem zivilen oder militärischen Überschallflugzeug eingesetzt zu werden und dementsprechend für Betriebszustände im subsonischen Bereich, im transsonischen Bereich und im supersonischen Bereich ausgelegt ist. Jedoch wird darauf hingewiesen, dass die Prinzipien der vorliegenden Erfindung in gleicher Weise in einem Turbofan-Triebwerk realisiert werden können, das allein für einen subsonischen Betrieb ausgelegt ist. Die Beschreibung der Erfindung im Kontext einer Triebwerksgondel eines für ein Überschallflugzeug vorgesehenen Triebwerks ist insofern nur beispielhaft zu verstehen.

Bevor auf die Triebwerksgondel und den durch diesen gebildeten Triebwerkseinlauf im Einzelnen eingegangen wird, wird darauf hingewiesen, dass das Turbofan-Triebwerk, das in der Triebwerksgondel angeordnet ist, in an sich bekannter Weise einen Fan, der mehrstufig ausgebildet sein kann, einen Primärstromkanal, der durch ein Kerntriebwerk führt und einen Sekundärstromkanal oder Bypass-Kanal, der an dem Kerntriebwerk vorbei führt, aufweist.

Das Kerntriebwerk weist einen Verdichter, eine Brennkammer und eine Turbine auf. Beispielsweise umfasst der Verdichter einen Hochdruckverdichter und einen Niederdruckverdichter, wobei ein Niederdruckverdichter durch die nabennahen Bereiche des Fans gebildet ist. Die hinter der Brennkammer angeordnete Turbine umfasst eine Hochdruckturbine und eine Niederdruckturbine. Die Hochdruckturbine treibt eine Hochdruckwelle an, die die Hochdruckturbine mit dem Hochdruckverdichter verbindet. Die Niederdruckturbine treibt eine Niederdruckwelle an, die die Niederdruckturbine mit dem Fan verbindet. Gemäß einer alternativen Ausgestaltung kann das Turbofantriebwerk zusätzlich einen Mitteldruckverdichter, eine Mitteldruckturbine und eine Mitteldruckwelle aufweisen.

Des Weiteren ist ein Mischer vorgesehen, der Luft des Sekundärstromkanals und des Primärstromkanals hinter dem Kerntriebwerk mischt. Hinter dem Mischer bildet das Triebwerk einen Strömungskanal, der sich durch eine Schubdüse erstreckt. Optional können zusätzlich ein Nachbrenner und/oder ein Schubumkehrer vorgesehen sein.

Das Turbofan-Triebwerk umfasst eine Maschinenachse oder Triebwerksmittellinie. Die Maschinenachse definiert eine axiale Richtung des Turbofan-Triebwerks. Eine radiale Richtung des Turbofan-Triebwerks verläuft senkrecht zur axialen Richtung.

Gemäß der Figur 1 umfassen die dargestellten vorderen Komponenten der Triebwerksgondel eine Gondelwand 1, die eine Einlauflippe 2 und eine Einlaufverkleidung 3 umfasst. Die Einlaufverkleidung 3 stellt dabei einen feststehenden stromabwärtigen Abschnitt der Gondelwand 1 und die Einlauflippe 2 einen stromaufwärtigen, in axialer Richtung verschiebbaren Abschnitt der Gondelwand 1 dar.

Die Einlaufverkleidung 3 umfasst eine Außenseite 31 und eine Innenseite 32. Die Einlauflippe 2 umfasst eine Außenseite 21 und eine Innenseite 22. Sie bildet eine Vorderkante 23 der Einlauflippe 2 und der Triebwerksgondel insgesamt. Die Außenseite 31 der Einlaufverkleidung 3 und die Außenseite 21 der Einlauflippe 2 bilden die Außenseite der Gondelwand 1. Ebenso bilden die Innenseite 32 der Einlaufverkleidung 3 und die Innenseite 22 der Einlauflippe die Innenseite der Gondelwand 1. Die Innenseite 22, 23 der Gondelwand 1 begrenzt dabei einen Triebwerkseinlauf 4 der Triebwerksgondel, der die für ein zugehöriges Triebwerk benötigte Luft aufnimmt und einem Fan zuführt.

An die dargestellten Komponenten 2, 3 der Triebwerksgondel schließen sich stromabwärts in an sich bekannter Weise weitere, nicht dargestellte Komponenten der Triebwerksgondel an. Beispielsweise kann vorgesehen sein, dass sich stromabwärts der Einlaufverkleidung 3 ein Fangehäuse anschließt. Ein solches Fan-Gehäuse ist typischerweise mittels einer Flansch-Verbindung, auch als A1-Verbindung bezeichnet, mit der Einlaufverkleidung 3 verbunden.

Der Triebwerkseinlauf 4 ist als supersonischer Einlauf ausgebildet, der eine supersonische Zuströmung im Einlauf auf ein subsonisches Geschwindigkeitsniveau reduziert, mit dem der nachfolgende Fan und Verdichter angeströmt wird. Der Triebwerkseinlauf 4 bzw. die Einlauflippe 2 und die Einlaufverkleidung 3, die den Triebwerkseinlauf 4 begrenzen, können dabei auf vielfältige Weise ausgebildet sein, beispielsweise als supersonischer Einlauf mit interner Kompression, mit externer Kompression oder mit gemischter Kompression. Auch kann vorgesehen sein, dass die Triebwerksgondel angeschrägt ausgebildet ist, um im Überschallflug eine günstige Verdichtungsstosskonfiguration zu erzielen. Auch insofern ist das in den Figuren dargestellte Ausführungsbeispiel lediglich beispielhaft zu verstehen.

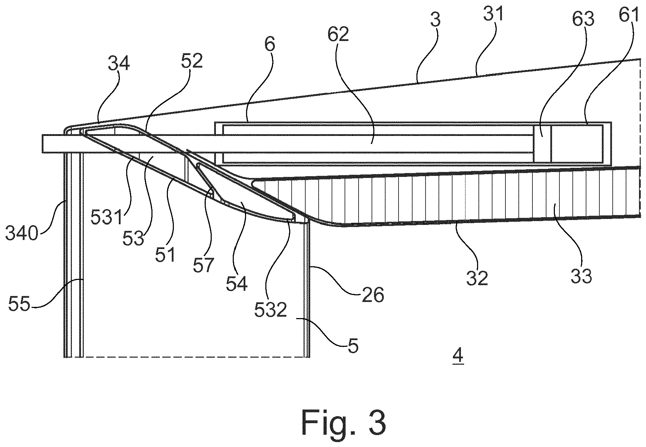

Die Einlauflippe 2 ist gegenüber der Einlaufverkleidung 3 in axialer Richtung verschiebbar angeordnet. Um dies zu realisieren, umfasst die Triebwerksgondel eine Mehrzahl von Aktuatoren 6, mittels derer die Einlauflippe 2 gegenüber der Einlaufverkleidung 3 in axialer Richtung bewegbar ist. Der genaue Aufbau der Aktuatoren 6 wird in Bezug auf die Figur 3 erläutert werden. In der Figur 1 sind zwei solche Aktuatoren 6 erkennbar. Typischerweise weist der Triebwerkseinlauf mindestens drei, beispielsweise fünf bis neun solcher Aktuatoren 6 auf.

Die Figur 1 zeigt die Einlauflippe 2 in einer ersten Position, in der sie maximal stromaufwärtig verschoben ist. In dieser Position öffnet sich zwischen der Einlaufverkleidung 3 und der Einlauflippe 2 ein Zusatz-Strömungskanal 7, der sich von der Außenhaut der Gondelwand 1 zum Triebwerkseinlauf 4 erstreckt und über den Umgebungsluft von der Außenseite der Triebwerksgondel in den Triebwerkseinlauf 4 strömen kann.

Die Triebwerksgondel umfasst des Weiteren eine ringförmige Dichtung 5, die zwischen dem feststehenden Abschnitt und dem verschiebbaren Abschnitt der Gondelwand 1, also zwischen der Einlaufverkleidung 3 und der Einlauflippe 2 ausgebildet ist. Die ringförmige Dichtung 5 kann aus einem elastischen Material, beispielsweise einem Silikonkautschuk bestehen. Sie ist mit dem stromaufwärtigen Ende der Einlaufverkleidung 3 verbunden bildet somit die stromabwärtige Begrenzung des Zusatz-Strömungskanals 7.

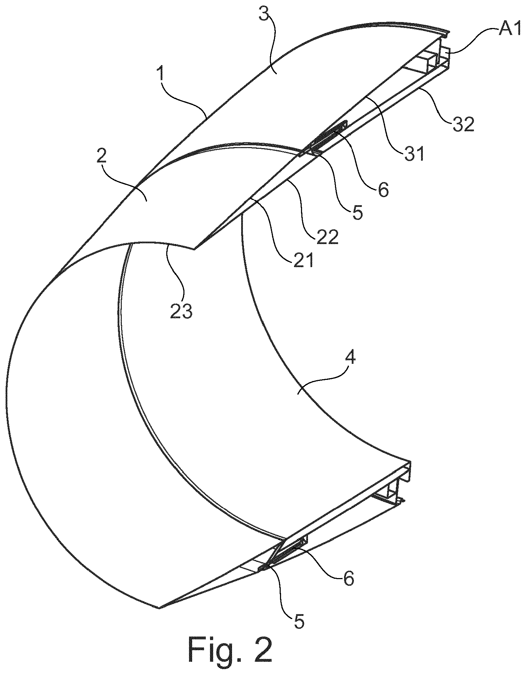

Die Figur 2 zeigt die Triebwerksgondel der Figur 1 in einer Konfiguration, in der sich die Einlauflippe 2 in einer zweiten, stromabwärtigen Position befindet. In dieser Position ist der ringförmige Zusatz-Strömungskanal 7 geschlossen. Die Einlauflippe 2, die ringförmige Dichtung 5 und die Einlaufverkleidung 3 liegen aneinander an. Durch die ringförmige Dichtung 5 wird dabei sichergestellt, dass in der dargestellten Konfiguration keine Luft von der Außenhaut der Gondelwand 1 in den Triebwerkseinlauf 4 strömen kann.

Die Figur 3 zeigt in einem teilweise geschnittenen Längsschnitt detaillierter die Ausbildung der ringförmigen Dichtung 5, der Aktuatoren 6 und deren Anordnung an/in der Einlaufverkleidung 3.

Die ringförmige Dichtung 5 bildet einen stromaufwärtigen, schräg verlaufenden Wandbereich 51 aus, der die stromabwärtige Begrenzung des Zusatz-Strömungskanals 7 (vgl. Figur 1) bildet. Sie umfasst des Weiteren einen stromabwärtigen, schräg verlaufenden Wandbereich 52, der mit benachbarten Wandstrukturen (nicht gesondert dargestellt) der Einlaufverkleidung 3 verbunden ist, beispielsweise über Schraubverbindungen oder Nietverbindungen und/oder Klebeverbindungen.

Weiter bildet die ringförmige Dichtung 5 zwei Hohlkammern 53, 54 aus, eine radial äußere Hohlkammer 53 und eine radial innere Hohlkammer 54. Die beiden Hohlkammern 53, 54 sind über einen Wandbereich 57 voneinander getrennt. Die Hohlkammern 53, 54 sind beispielsweise mit Luft oder einem anderen Gas gefüllt. Die Hohlkammer 53 bildet zum Zusatz-Strömungskanal hin eine Wandung 531 und die Hohlkammer 54 bildet zum Zusatz-Strömungskanal hin eine Wandung 532. Die Wandlungen 531, 532 bilden dabei den stromaufwärtigen Wandbereich 51.

Die Ausbildung der ringförmigen Dichtung 5 durch Hohlkammern 53, 54 reduziert das Gewicht der ringförmigen Dichtung 5. Gleichzeitig wird es ermöglicht, über die Wandstärke und das Material der Hohlkammern die Elastizität der ringförmigen Dichtung 5 einzustellen.

Es kann in einer Ausführungsvariante vorgesehen sein, dass die Form der Hohlkammern 53, 54 durch einen unterschiedlichen Befüllungsgrad der Hohlkammern 53, 43 mit Luft/Gas abhängig von der axialen Position des verschiebbaren Abschnitts 2 eingestellt wird. Hierdurch kann eine weitergehende Optimierung der aerodynamischen Eigenschaften der ringförmigen Dichtung 5 abhängig vom Betriebszustand erreicht werden.

Die dargestellte Ausbildung der ringförmigen Dichtung durch zwei Hohlkammern ist nur beispielhaft zu verstehen. Alternativ kann eine größere Anzahl von Hohlkammern vorgesehen sein. Weiter wird darauf hingewiesen, dass alternativ grundsätzlich auch vorgesehen sein kann, die ringförmige Dichtung als massives Teil, also ohne Hohlkammern auszubilden.

Die ringförmige Dichtung 5 weist jedenfalls entlang des stromaufwärtigen Wandbereichs 51, der an den Zusatz-Strömungskanal angrenzend, eine glatte und kantenfreie Form auf. Hierdurch werden Verwirbelungen und Strömungsverluste im Zusatz-Strömungskanal minimiert.

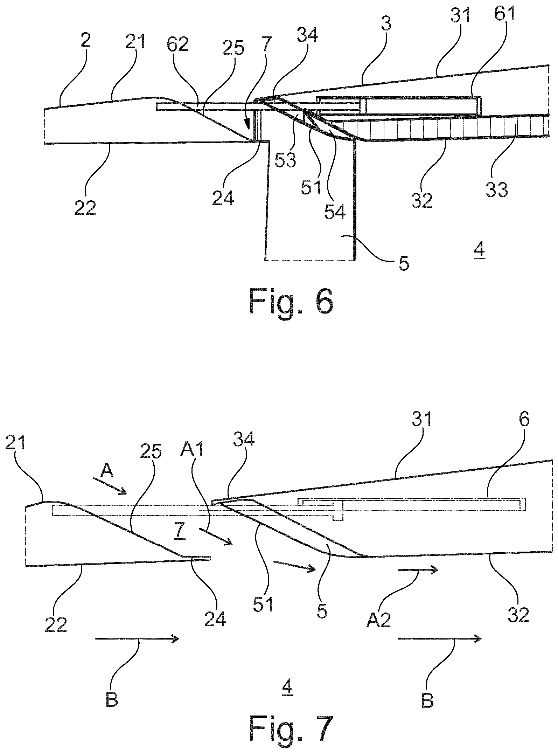

Dabei ist vorgesehen, dass die ringförmige Dichtung 5 im Bereich der radial inneren Hohlkammer 54 in Richtung des Triebwerkseinlaufs 4 zunehmend eine axiale Ausrichtung aufweist, so dass aus dem Zusatz-Strömungskanal in den Triebwerkseinlauf 4 eintretende Luft mit einer im wesentlichen axialen Komponente in den Triebwerkseinlauf 4 geleitet wird. Dies wird in Bezug auf die Figur 7 noch näher erläutert werden.

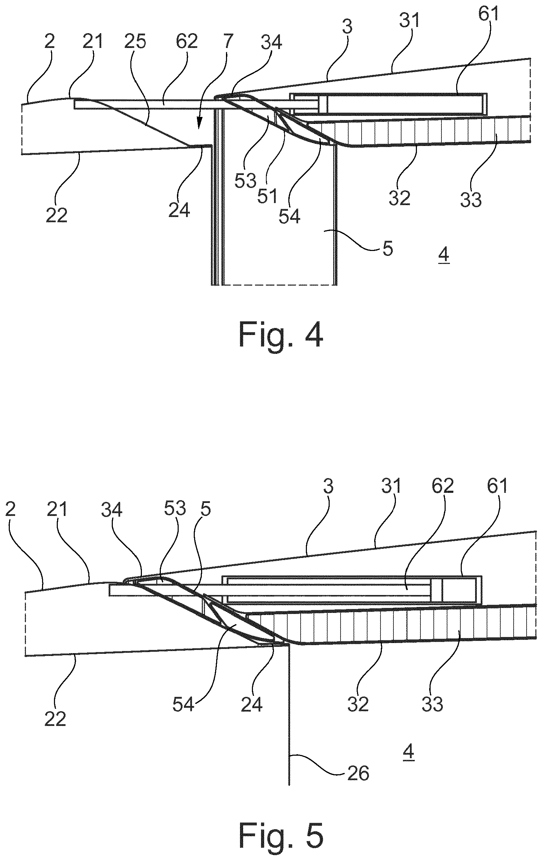

Die Figur 3 zeigt des Weiteren den Aktuator 6 zur axialen Verschiebung der Einlauflippe 2. Der Aktuator 6 umfasst einen einfach wirkenden Zylinder 61, in dem eine Kolbenstange 62 mit einer Kolbenfläche 63 linear verschiebbar angeordnet ist. Eine Verschiebung der Kolbenstange 62 kann dabei durch hydraulische, pneumatische oder elektrische Mittel bewirkt werden. Der Zylinder 61 ist in der Einlaufverkleidung 3 gelagert. Die Kolbenstange 62 ragt aus der Einlaufverkleidung 3 heraus und ist an ihrem Ende mit der Einlauflippe verbunden, wie anhand der Figuren 4-6 noch erläutert werden wird.

Die Einlaufverkleidung 3 bildet an ihrer Außenseite 31 einen stromaufwärts abstehenden Wandbereich 34 aus, der die ringförmige Dichtung 5 radial außen begrenzt. Die hierdurch gezielte Funktion wird in Bezug auf die Figur 5 erläutert werden.

Weiter wird darauf hingewiesen, dass die Einlaufverkleidung 3 angrenzend an die Innenseite 32 eine schallabsorbierende Verkleidung 33 aufweist, um die Lärmerzeugung des Triebwerks zu reduzieren. Eine solche schallabsorbierenden Verkleidung kann auch an der Innenseite der Einlauflippe 2 vorgesehen sein.

Die Figuren 4 bis 6 zeigen in einer Darstellung, die der Darstellung der Figur 3 entspricht, die Triebwerksgondel mit drei verschiedenen axialen Positionen der Einlauflippe 2. Dabei zeigt die Figur 4 die Einlauflippe 2 in der ersten, stromaufwärtigen Position (entsprechend der Figur 1). Die Figur 5 zeigt die Einlauflippe 2 in der zweiten, stromabwärtigen Position (entsprechend der Figur 2). Die Figur 6 zeigt die Einlauflippe 2 in einer Position, die zwischen der ersten und der zweiten Position liegt. Anders als in der Figur 3 zeigen die Figuren 4 bis 6 dabei auch die Einlauflippe 2. Das Ende der Kolbenstange 62 ist mit dem stromabwärtigen Ende der Einlauflippe 2 fest verbunden, so dass über eine Verschiebung der Kolbenstange 62 (bzw. der Kolbenstangen 62 mehrerer, entlang des Umfangs einer Verkleidung 3 angeordneter Aktuatoren 6) eine axiale Verschiebung der Einlauflippe 2 erreicht werden kann.

Die Einlauflippe 2 bildet an ihrem stromabwärtigen Ende eine schräg verlaufende Begrenzungswand 25 aus, die die stromaufwärtige Begrenzung des Zusatz-Strömungskanals 7 bildet. Die ringförmige Dichtung 5 bildet die stromabwärtige Begrenzung des Zusatz-Strömungskanals 7. Weiter bildet die Einlauflippe 2 an ihrer Innenseite 22 einen stromabwärts abstehenden Wandbereich 24 aus, der sich in Richtung der Einlaufverkleidung 3 erstreckt. Die hierdurch erzielte Funktion wird in Bezug auf die Figur 5 erläutert werden.

In der Konfiguration der Figur 4 ist der Zusatz-Strömungskanal 7 maximal geöffnet, so dass in maximalem Umfang Umgebungsluft von der Außenhaut der Gondelwand in den Triebwerkseinlauf 4 strömen kann.

In der Konfiguration der Figur 5 ist der Zusatz-Strömungskanal dagegen geschlossen. Die Einlauflippe 2 und die Einlaufverkleidung 3 liegen dabei beide unmittelbar an der ringförmigen Dichtung 5 an. Durch die abstehenden Wandbereiche 24, 34, die die ringförmige Dichtung 5 jeweils überragen und sich in Richtung des jeweils anderen Wandabschnitts erstrecken, wird dabei erreicht, dass im geschlossenen Zustand des Zusatz-Strömungskanals die Außenseite und die Innenseite der Gondelwand glatt ausgebildet sind.

In der Figur 5 ist weiter zu erkennen, dass der abstehende Wandbereich 24 der Einlauflippe eine Hinterkante 26 der Einlauflippe 2 ausbildet.

In der Konfiguration der Figur 6 ist der Zusatz-Strömungskanal 7 teilweise geöffnet. Über die axiale Position der Einlauflippe 2 kann die Größe des Zusatz-Strömungskanals 7 und damit der Luftstrom durch den Zusatz-Strömungskanal 7 in den Triebwerkseinlauf 4 gesteuert und eingestellt werden.

Die Figur 7 zeigt in einer Schnittdarstellung schematisch die Strömung durch den Zusatz-Strömungskanal 7. Umgebungsluft A wird in den Strömungskanal 7 geleitet und strömt dort entsprechend dem Pfeil A1 mit einer radial nach innen gerichteten und einer axialen Richtungskomponente. Der Zusatz-Strömungskanal 7 ist dabei derart ausgestaltet, dass er in Richtung des Triebwerkseinlaufs 4 zunehmend in axialer Richtung verläuft, so dass die axiale Komponente der Strömung im Zusatz-Strömungskanal 7 sukzessive zunimmt und die Strömung am Ausgang des Zusatz-Strömungskanals 7 entsprechend dem Pfeil A2 in axialer Richtung oder näherungsweise in axialer Richtung verläuft. Dies wird erreicht zum einen durch einen gebogenen Verlauf des Wandbereichs 51 der ringförmigen Dichtung 5, der zum Triebwerkseinlauf 4 hin zunehmend in axialer Richtung verläuft. Zum anderen blockiert der vorstehende Wandbereich 24 radial verlaufende Strömungskomponenten im Zusatz-Strömungskanal 7.

Damit bildet die eingeströmte Umgebungsluft A2 am Ausgang des Zusatz-Strömungskanals 7 eine Randströmung im Triebwerkseinlauf 4, die angrenzend an die Innenseite 32 der Gondelwand verläuft und dadurch einen Strömungsabriss der Strömung B im Triebwerkseinlauf 4 hinter der Einlauflippe 2 verhindert oder reduziert.

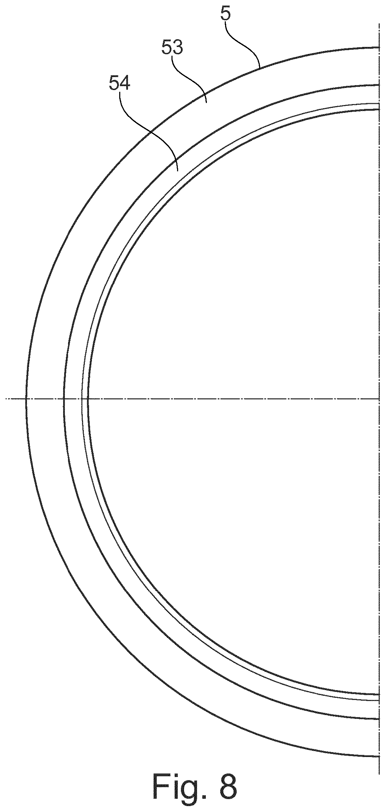

Die Figur 8 zeigt in einer Ansicht von vorne die ringförmige Dichtung 5 der vorhergehenden Figuren. Wie bereits erläutert, umfasst die Dichtung eine radial äußere Hohlkammer 53 und eine radial innere Hohlkammern 54. Die Dichtung 5 kann einstückig ausgebildet sein und sich über einen Winkelbereich von 360° erstrecken. Alternativ kann sie aus mehreren Ringsegmenten von beispielsweise 180°, 90°, 45° oder 30° bestehen, die in Umfangsrichtung aneinander angrenzend angeordnet sind. Die Bereitstellung der Dichtung aus mehreren Ringsegmenten kann vorteilhaft im Hinblick auf Herstellungskosten und Wartungskosten sein.

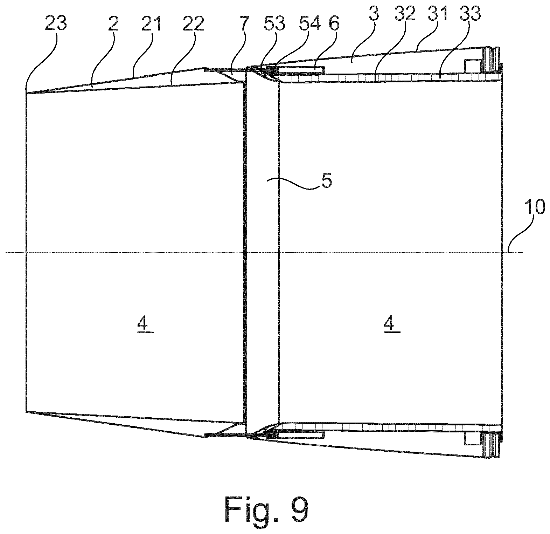

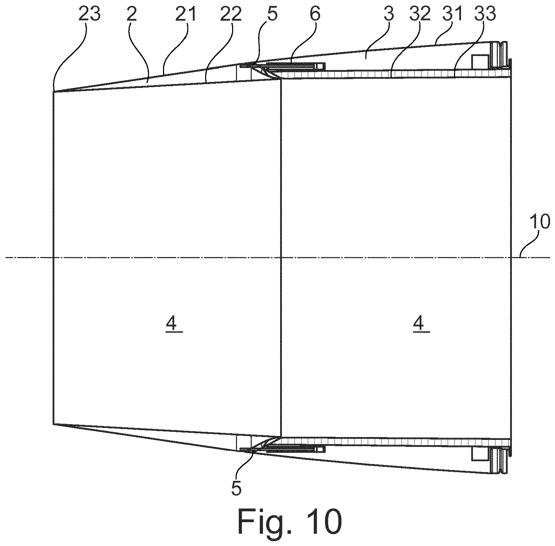

Die Figuren 9 und 10 zeigen zwei Längsschnitte der Triebwerksgondel, wobei die Figur 9 die Einlauflippe 2 in der stromaufwärtigen Position (entsprechend der Figur 1) und die Figur 10 die Einlauflippe in der stromabwärtigen, geschlossenen Position (entsprechend der Figur 2) zeigt. Die Figuren 9 und 10 zeigen dabei auch die Maschinenachse 10 des zugehörigen Triebwerks.

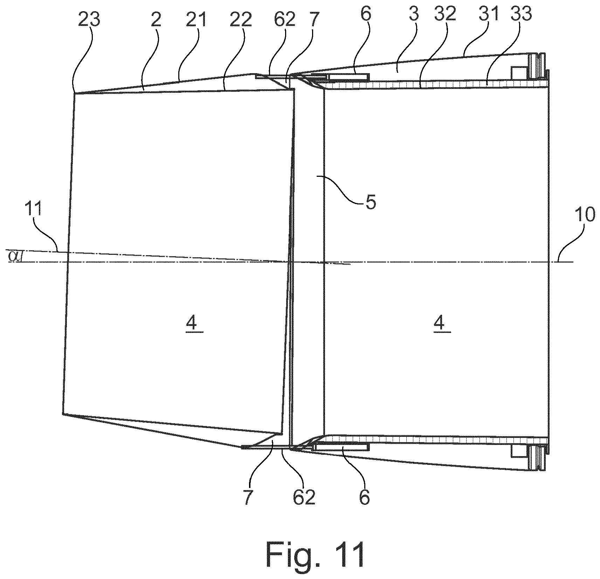

Die Figur 11 zeigt einen Längsschnitt der Triebwerksgondel, bei der die Einlauflippe 2 gegenüber der Einlaufverkleidung 3 verkippt ist. So liegt eine Verkippung der Zuströmachse 11 gegenüber der Maschinenachse 10 um den Winkel α vor. Die Einlauflippe 2 ist dabei um die Querachse des Triebwerks verkippt. Alternativ oder zusätzlich kann auch eine Verkippung um die vertikale Achse (Gierachse) vorliegen. Während somit bei den Figuren 1-10 die Zuströmachse 11 identisch mit der Maschinenachse 10 verläuft, weicht sie beim Ausführungsbeispiel der Figur 11 von der Maschinenachse 10 ab.

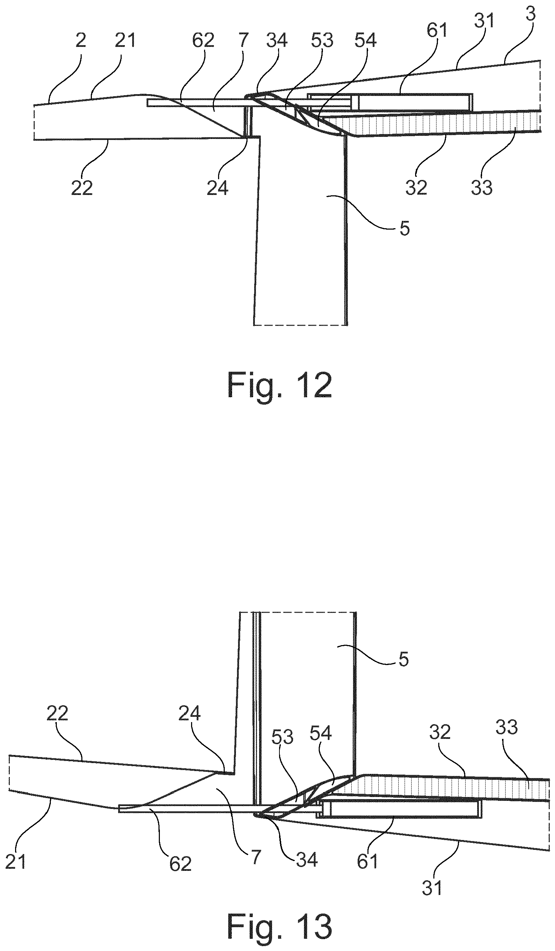

Dies wird dadurch erreicht, dass die Aktuatoren 6 in unterschiedlichem Maße die jeweilige Kolbenstange 62 ausfahren. So ist die Kolbenstange 62 in der Figur 11 bei dem unten dargestellten Aktuator 6 weiter ausgefahren als bei dem oben dargestellten Aktuator 6. Dies ist in den Darstellungen der Figuren 12 und 13 zusätzlich vergrößert dargestellt. Durch entsprechend unterschiedliches Verfahren der Kolbenstange 62 können Verkippungen um die Querachse und/oder um die vertikale Achse des Triebwerks vorgenommen werden.

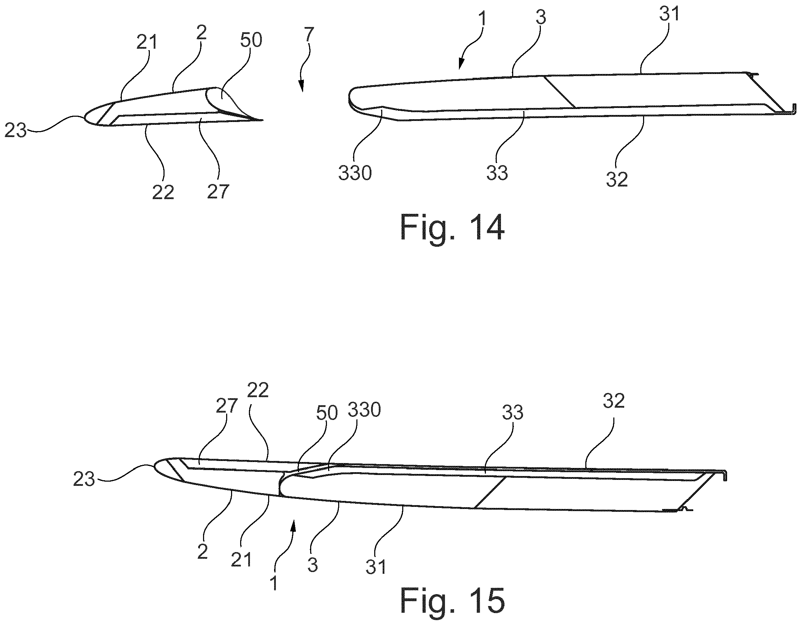

Die Figuren 14 und 15 zeigen ein Ausführungsbeispiel, bei dem die ringförmige Dichtung nicht am stromaufwärtigen Ende des feststehenden Abschnitts angeordnet ist, wie es bei den Figuren 1-13 der Fall ist, sondern am stromabwärtigen Ende des verschiebbaren Abschnitts. Der grundsätzliche Aufbau entspricht dem der Figuren 1-13. Die Gondelwand 1 umfasst eine Einlauflippe 2 und eine Einlaufverkleidung 3. Die Einlaufverkleidung 3 stellt einen feststehenden stromabwärtigen Abschnitt der Gondelwand 1 und die Einlauflippe 2 einen stromaufwärtigen, in axialer Richtung verschiebbaren Abschnitt der Gondelwand 1 dar. Die hierzu vorgesehenen Verstellaktuatoren sind nicht dargestellt. Sie können entsprechend den Aktuatoren der Figuren 1 bis 13 ausgebildet sein.

Die Einlaufverkleidung 3 umfasst eine Außenseite 31 und eine Innenseite 32. Die Innenseite 32 ist mit einer schallabsorbierenden Verkleidung 33 versehen. Die Einlauflippe 2 umfasst eine Außenseite 21 und eine Innenseite 22. Die Innenseite 22 ist ebenfalls mit einer schallabsorbierenden Verkleidung 27 versehen. Die Einlauflippe 2 bildet die Vorderkante 23 der Triebwerksgondel aus.

In der Darstellung der Figur 14 befindet sich die Einlauflippe 2 in der axial vorderen Position, so dass zwischen der Einlauflippe 2 und der Einlaufverkleidung 3 ein ringförmiger Zusatz-Strömungskanal 7 ausgebildet ist.

Es ist eine ringförmige Dichtung 50 vorgesehen, die am stromabwärtigen Ende der Einlauflippe 2 befestigt ist und aus einem elastischen Material besteht. Die ringförmige Dichtung 50 bildet dabei eine aerodynamisch glatte Oberfläche für Luft, die durch den Zusatz-Strömungskanal 7 in den Triebwerkseinlauf strömt. Die ringförmige Dichtung 50 kann grundsätzlich entsprechend der ringförmigen Dichtung 5 der Figuren 1-13 aufgebaut sein, d.h. zum Beispiel ein oder mehrere aufblasbare Kammern umfassen.

Aufgrund der Anordnung der ringförmigen Dichtung 50 an der Einlauflippe 2 ist es möglich und vorgesehen, die schallabsorbierende Verkleidung 33 der Einlaufverkleidung 3 stärker in den Zusatz-Strömungskanal 7 hinein zu ziehen. So bildet diese einen Abschnitt 330 aus, der an den Zusatz-Strömungskanal 7 angrenzt.

Die Figur 15 zeigt die Einlauflippe 2 in der axial hinteren Position, wenn der Zusatz-Strömungskanal geschlossen ist und die Einlauflippe 2, die ringförmige Dichtung 50 und die Einlaufverkleidung 3 aneinander angrenzen.

Die Figuren 14 und 15 illustrieren zusätzlich die Realisierung eines weiteren, optionalen Merkmals der ringförmigen Dichtung 50. So ist vorgesehen, dass die ringförmige Dichtung 50 in ihrer Form modulierbar ist, und zwar abhängig vom Betriebszustand bzw. von der axialen Position der Einlauflippe 2. Eine solche Modulierbarkeit wird beispielsweise durch den Befüllungsgrad von Hohlkammern der Einlauflippe 50 bereitgestellt. Die Figur 14 zeigt die ringförmige Dichtung 50 im maximal aufgeblasenen Zustand bzw. mit maximalem Volumen. Sie erzeugt dabei eine aerodynamisch glatte Fläche am stromaufwärtigen Ende des Zusatz-Strömungskanals 7. Die Figur 15 zeigt die ringförmige Dichtung 50 dagegen im minimal aufgeblasenen Zustand bzw. mit minimalem Volumen, wobei sie gut verstaubar zwischen der Einlauflippe 2 und der Einlaufverkleidung 3 anordbar ist.

Die vorliegende Erfindung beschränkt sich in ihrer Ausgestaltung nicht auf die vorstehend beschriebenen Ausführungsbeispiele. Beispielsweise sind die genaue Form und die strukturelle Ausgestaltung der ringförmigen Dichtung nur beispielhaft zu verstehen. Auch wird darauf hingewiesen, dass der verschiebbare Abschnitt der Gondelwand nicht notwendigerweise durch die Einlauflippe gebildet ist. Beispielsweise kann alternativ vorgesehen sein, dass die Einlaufverkleidung zwei axial aufeinanderfolgende Abschnitte aufweist, von denen der eine mit dem Fangehäuse und der andere mit der Einlauflippe verbunden ist, wobei eine axiale Verschiebbarkeit zwischen diesen beiden Abschnitten realisiert ist.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Triebwerksgondel für ein Turbofan-Triebwerk, die aufweist:
- eine Gondelwand (1), die eine Innenseite (22, 32) und eine Außenseite (21, 31) aufweist, wobei die Gondelwand (1) eine Einlauflippe (2) umfasst, die am stromaufwärtigen Ende der Triebwerksgondel ausgebildet ist, und
- einen Triebwerkseinlauf (4), der die für ein zugehöriges Triebwerk benötigte Luft aufnimmt und der durch die Innenseite (22, 32) der Gondelwand (1) begrenzt ist, wobei
- die Gondelwand (1) einen feststehenden stromabwärtigen Abschnitt (3) und einen in axialer Richtung verschiebbaren stromaufwärtigen Abschnitt (2) aufweist und der verschiebbare stromaufwärtige Abschnitt (2) zwischen einer ersten, stromaufwärtigen Position und einer zweiten, stromabwärtigen Position verschiebbar ist,
- die Triebswerksgondel in der ersten Position des verschiebbaren Abschnitts (2) einen ringförmigen Zusatz-Strömungskanal (7) ausbildet, der sich von der Außenseite der Gondelwand (1) zum Triebwerkseinlauf (4) erstreckt und dabei derart ausgebildet ist, dass im Betrieb eines Turbofan-Triebwerks, das die Triebwerksgondel umfasst, über den Zusatz-Strömungskanal (7) Umgebungsluft von der Außenseite der Gondelwand (1) stromaufwärts des Fans des zugehörigen Turbofan-Triebwerks in den Triebwerkseinlauf (4) strömen kann, wobei das stromabwärtige Ende des Zusatz-Strömungskanals (7) stromaufwärts des Fans des zugehörigen Turbofan-Triebwerks endet, und
- der ringförmige Zusatz-Strömungskanal (7) in der zweiten Position des verschiebbaren Abschnitts (2) geschlossen ist,
**gekennzeichnet durch** eine ringförmige Dichtung (5, 50), die zwischen dem feststehenden Abschnitt (3) und dem verschiebbaren Abschnitt (2) der Gondelwand (1) ausgebildet ist, wobei
- in der zweiten Position des verschiebbaren Abschnitts (2) der feststehende Abschnitt (3), die ringförmige Dichtung (5, 50) und der verschiebbare Abschnitt (2) aneinander angrenzen,
- die ringförmige Dichtung (5, 50) mindestens eine Hohlkammer (53, 54) aufweist, und
- die mindestens eine Hohlkammer (53, 54) dazu geeignet und ausgebildet ist, während des Betriebs durch Einstellung ihres Befüllungsgrads in ihrer Form veränderbar zu sein.

2. Triebwerksgondel nach Anspruch 1, **dadurch gekennzeichnet, dass** die ringförmige Dichtung (5) mit dem stromaufwärtigen Ende des feststehenden Abschnitts (3) der Gondelwand (1) verbunden ist.

3. Triebwerksgondel nach Anspruch 1, **dadurch gekennzeichnet, dass** die ringförmige Dichtung (50) mit dem stromabwärtigen Ende des verschiebbaren Abschnitts (2) der Gondelwand (1) verbunden ist.

4. Triebwerksgondel nach Anspruch 1 oder 2, **dadurch gekennzeichnet, dass** die ringförmige Dichtung (5, 50) aus einem elastischen Material besteht.

5. Triebwerksgondel nach einem der vorangehenden Ansprüche, **dadurch gekennzeichnet, dass** die ringförmige Dichtung (5, 50) einstückig ausgebildet ist und einen Dichtungsring bildet.

6. Triebwerksgondel nach einem der vorangehenden Ansprüche, **dadurch gekennzeichnet, dass** die Form der mindestens einen Hohlkammer (53, 54) und damit die Form der ringförmigen Dichtung (5, 50) abhängig von der axialen Position der verschiebbaren Abschnitts (2) einstellbar ist.

7. Triebwerksgondel nach Anspruch 6, **dadurch gekennzeichnet, dass** die mindestens eine Hohlkammer (53, 54) mit einem größeren Volumen versehen ist, wenn sich der verschiebbare Abschnitt (2) in der stromaufwärtigen Position befindet, und mit einem geringeren Volumen versehen ist, wenn sich der verschiebbare Abschnitt (2) in der stromabwärtigen Position befindet.

8. Triebwerksgondel nach einem der vorangehenden Ansprüche, **dadurch gekennzeichnet, dass** die ringförmige Dichtung (5, 50) eine glatte und kantenfreie stromaufwärtige oder stromabwärtige Begrenzung des Zusatz-Strömungskanals (7) bildet.

9. Triebwerksgondel nach einem der vorangehenden Ansprüche, **dadurch gekennzeichnet, dass** der verschiebbare Abschnitt (2) der Gondelwand an seiner Innenseite einen stromabwärts abstehenden Wandbereich (24) bildet, der im geschlossenen Zustand des Zusatz-Strömungskanals (7) radial innen der ringförmigen Dichtung (5) positioniert ist und dabei den Triebwerkseinlauf (4) begrenzt.

10. Triebwerksgondel nach einem der vorangehenden Ansprüche, **dadurch gekennzeichnet, dass** der Zusatz-Strömungskanal (7) und die ringförmige Dichtung (5, 50) derart ausgebildet und geformt sind, dass die aus dem Zusatz-Strömungskanal (7) austretende Luft im Wesentlichen in axialer Richtung in den Triebwerkseinlauf (4) eintritt.

11. Triebwerksgondel nach einem der vorangehenden Ansprüche, **dadurch gekennzeichnet, dass** der verschiebbare Abschnitt (2) der Gondelwand (1) gegenüber dem feststehenden Abschnitt (3) der Gondelwand (1) zusätzlich kippbar angeordnet ist.

12. Triebwerksgondel nach einem der vorangehenden Ansprüche, **dadurch gekennzeichnet, dass** der verschiebbare Abschnitt (2) der Triebwerksgondel durch die Einlauflippe der Triebwerksgondel gebildet ist.

13. Triebwerksgondel nach einem der vorangehenden Ansprüche, **dadurch gekennzeichnet, dass** der Triebwerkseinlauf als Überschalleinlauf ausgebildet ist.

## Claims

1. Engine nacelle for a turbofan engine, which engine nacelle has:
- a nacelle wall (1) which has an inner side (22, 32) and an outer side (21, 31), wherein the nacelle wall (1) has an inlet lip (2) which is formed on the upstream end of the engine nacelle, and
- an engine inlet (4) which takes in the air required for an associated engine and which is delimited by the inner side (22, 32) of the nacelle wall (1), wherein
- the nacelle wall (1) has a fixed downstream section (3) and has an upstream section (2) which is displaceable in an axial direction, and the displaceable upstream section (2) is displaceable between a first, upstream position and a second, downstream position,
- the engine nacelle, in the first position of the displaceable section (2), forms a ring-shaped auxiliary flow duct (7) which extends from the outer side of the nacelle wall (1) to the engine inlet (4) and which is in this case formed such that, during the operation of a turbofan engine which comprises the engine nacelle, ambient air can flow via the auxiliary flow duct (7) from the outside of the nacelle wall (1) upstream of the fan of the associated turbofan engine into the engine inlet (4), wherein the downstream end of the auxiliary flow channel (7) ends upstream of the fan of the associated turbofan engine, and
- the ring-shaped auxiliary flow channel (7) is closed in the second position of the displaceable section (2),
**characterized by**
a ring-shaped seal (5, 50) which is formed between the fixed section (3) and the displaceable section (2) of the nacelle wall (1), wherein,
- in the second position of the displaceable section (2), the fixed section (3), the ring-shaped seal (5, 50) and the displaceable section (2) adjoin one another,
- the ring-shaped seal (5, 50) has at least one hollow chamber (53, 54), and
- the at least one hollow chamber (53, 54) is suitable and designed to be variable in terms of its shape during operation by adjustment of the degree of filling thereof.

2. Engine nacelle according to Claim 1, **characterized in that** the ring-shaped seal (5) is connected to the upstream end of the fixed section (3) of the nacelle wall (1).

3. Engine nacelle according to Claim 1, **characterized in that** the ring-shaped seal (50) is connected to the downstream end of the displaceable section (2) of the nacelle wall (1).

4. Engine nacelle according to Claim 1 or 2, **characterized in that** the ring-shaped seal (5, 50) is composed of an elastic material.

5. Engine nacelle according to any of the preceding claims, **characterized in that** the ring-shaped seal (5, 50) is formed as a single piece and forms a seal ring.

6. Engine nacelle according to any of the preceding claims, **characterized in that** the shape of the at least one hollow chamber (53, 54) and thus the shape of the ring-shaped seal (5, 50) is adjustable in a manner dependent on the axial position of the displaceable section (2).

7. Engine nacelle according to Claim 6, **characterized in that** the at least one hollow chamber (53, 54) is provided with a relatively large volume when the displaceable section (2) is situated in the upstream position and is provided with a relatively small volume when the displaceable section (2) is situated in the downstream position.

8. Engine nacelle according to any of the preceding claims, **characterized in that** the ring-shaped seal (5, 50) forms a smooth and edge-free upstream or downstream delimitation of the auxiliary flow channel (7).

9. Engine nacelle according to any of the preceding claims, **characterized in that** the displaceable section (2) of the nacelle wall forms, on its inner side, a wall region (24) which protrudes downstream and which, in the closed state of the auxiliary flow channel (7), is positioned radially to the inside of the ring-shaped seal (5) and, here, delimits the engine inlet (4).

10. Engine nacelle according to any of the preceding claims, **characterized in that** the auxiliary flow channel (7) and the ring-shaped seal (5, 50) are formed and shaped such that the air emerging from the auxiliary flow channel (7) enters the engine inlet (4) substantially in an axial direction.

11. Engine nacelle according to any of the preceding claims, **characterized in that** the displaceable section (2) of the nacelle wall (1) is arranged so as to additionally be tiltable relative to the fixed section (3) of the nacelle wall (1).

12. Engine nacelle according to any of the preceding claims, **characterized in that** the displaceable section (2) of the engine nacelle is formed by the inlet lip of the engine nacelle.

13. Engine nacelle according to any of the preceding claims, **characterized in that** the engine inlet is formed as a supersonic inlet.

## Revendications

1. Nacelle de moteur pour une turbosoufflante, présentant :
- une paroi de nacelle (1) qui présente une face intérieure (22, 32) et une face extérieure (21, 31), la paroi de nacelle (1) comprenant une lèvre d'entrée (2) qui est réalisée à l'extrémité amont de la nacelle de moteur, et
- une entrée de moteur (4) qui reçoit l'air nécessaire au moteur associé et qui est délimitée par la face intérieure (22, 32) de la paroi de nacelle (1), dans laquelle
- la paroi de nacelle (1) présente une partie aval fixe (3) et une partie amont (2) pouvant être déplacée dans la direction axiale, et la partie amont déplaçable (2) peut être déplacée entre une première position amont et une deuxième position aval,
- la nacelle de moteur réalise dans la première position de la partie déplaçable (2) un canal d'écoulement supplémentaire annulaire (7) qui s'étend de la face extérieure de la paroi de nacelle (1) jusqu'à l'entrée de moteur (4) et est alors réalisée de telle sorte qu'en cours de fonctionnement d'une turbosoufflante comprise dans la nacelle de moteur, de l'air ambiant peut circuler dans l'entrée de moteur (4) à travers le canal d'écoulement supplémentaire (7) de la face extérieure de la paroi de nacelle (1) en amont de la soufflante de la turbosoufflante associée, l'extrémité aval du canal d'écoulement supplémentaire (7) se terminant en amont de la soufflante de la turbosoufflante associée, et
- le canal d'écoulement supplémentaire annulaire (7) est fermé dans la deuxième position de la partie déplaçable (2),
**caractérisée par** un joint d'étanchéité annulaire (5, 50) qui est réalisé entre la partie fixe (3) et la partie déplaçable (2) de la paroi de nacelle (1), dans laquelle
- dans la deuxième position de la partie déplaçable (2), la partie fixe (3), le joint d'étanchéité annulaire (5, 50) et la partie déplaçable (2) sont adjacents les uns aux autres,
- le joint d'étanchéité annulaire (5, 50) présente au moins une chambre creuse (53, 54), et
- ladite au moins une chambre creuse (53, 54) est adaptée et réalisée pour être variable quant à sa forme par un réglage du degré de remplissage en cours de fonctionnement.

2. Nacelle de moteur selon la revendication 1, **caractérisée en ce que** le joint d'étanchéité annulaire (5) est relié à l'extrémité amont de la partie fixe (3) de la paroi de nacelle (1).

3. Nacelle de moteur selon la revendication 1, **caractérisée en ce que** le joint d'étanchéité annulaire (50) est relié à l'extrémité aval de la partie déplaçable (2) de la paroi de nacelle (1).

4. Nacelle de moteur selon la revendication 1 ou 2, **caractérisée en ce que** le joint d'étanchéité annulaire (5, 50) est composé d'un matériau élastique.

5. Nacelle de moteur selon l'une quelconque des revendications précédentes, **caractérisée en ce que** le joint d'étanchéité annulaire (5, 50) est réalisé d'un seul tenant et forme une bague d'étanchéité.

6. Nacelle de moteur selon l'une quelconque des revendications précédentes, **caractérisée en ce que** la forme de ladite au moins une chambre creuse (53, 54), et donc la forme du joint d'étanchéité annulaire (5, 50), est réglable en fonction de la position axiale de la partie déplaçable (2).

7. Nacelle de moteur selon la revendication 6, **caractérisée en ce que** ladite au moins une chambre creuse (53, 54) est dotée d'un volume plus grand si la partie déplaçable (2) se trouve dans la position amont, et est dotée d'un volume plus petit si la partie déplaçable (2) se trouve dans la position aval.

8. Nacelle de moteur selon l'une quelconque des revendications précédentes, **caractérisée en ce que** le joint d'étanchéité annulaire (5, 50) forme une délimitation amont ou aval, lisse et sans arête, du canal d'écoulement supplémentaire (7).

9. Nacelle de moteur selon l'une quelconque des revendications précédentes, **caractérisée en ce que** la partie déplaçable (2) de la paroi de nacelle forme sur sa face intérieure une zone de paroi (24) faisant saillie en aval qui, à l'état fermé du canal d'écoulement supplémentaire (7), est positionnée radialement à l'intérieur du joint annulaire (5) tout en délimitant l'entrée de moteur (4).

10. Nacelle de moteur selon l'une quelconque des revendications précédentes, **caractérisée en ce que** le canal d'écoulement supplémentaire (7) et le joint d'étanchéité annulaire (5, 50) sont réalisés et formés de telle sorte que l'air sortant du canal d'écoulement supplémentaire (7) entre dans l'entrée de moteur (4) substantiellement dans la direction axiale.

11. Nacelle de moteur selon l'une quelconque des revendications précédentes, **caractérisée en ce que** la partie déplaçable (2) de la paroi de nacelle (1) est disposée de plus en basculement par rapport à la partie fixe (3) de la paroi de nacelle (1).

12. Nacelle de moteur selon l'une quelconque des revendications précédentes, **caractérisée en ce que** la partie déplaçable (2) de la nacelle de moteur est formée par la lèvre d'entrée de la nacelle de moteur.

13. Nacelle de moteur selon l'une quelconque des revendications précédentes, **caractérisée en ce que** l'entrée de moteur est réalisée sous forme d'entrée supersonique.
